# EUROPEAN PATENT APPLICATION

(11) **EP 2 527 612 A1**
(43) Date of publication of application: **28.11.2012**
(21) Application number: 11734631.2
(22) Date of filing: 18.01.2011
(51) Int. Cl.: F01N 3/36, F01N 3/08, F01N 3/24

(54) **INTERNAL COMBUSTION ENGINE FOR SHIP**

(30) Priority: 21.01.2010 JP 2010011160
(71) Applicant: Mitsubishi Heavy Industries, Ltd., Tokyo 108-8215 (JP)
(72) Inventor: SHIRAISHI, Keiichi, Tokyo 108-8215 (JP); TAKASHIMA, Ryuhei, Tokyo 108-8215 (JP); MURATA, Satoru, Tokyo 108-8215 (JP)
(74) Representative: Henkel, Breuer & Partner
(86) International application number: PCT/JP2011/050746
(87) International publication number: WO 2011/090025

(57) **Abstract**

Provided are a cylinder section (2) that is supplied with air and fuel so as to generate rotational driving force and that discharges exhaust gas; an exhaust receiver (3) that receives the exhaust gas discharged from the cylinder section (2); an outer combustion tube (9) that receives the exhaust gas discharged from the exhaust receiver (3); an inner combustion tube (8) that is disposed inside the outer combustion tube (9) and ejects fuel and combustion air into the outer combustion tube (9) so as to combust the exhaust gas therein; a turbocharger (5) that is driven by the exhaust gas heated within the outer combustion tube (9) and discharged from the outer combustion tube (9) and that turbocharges the air to be supplied to the cylinder section (2); and a denitrator having a catalyst that reduces nitrogen oxide contained in the exhaust gas discharged from the turbocharger (5).

## Description

### {Technical Field}

The present invention specifically relates to marine internal combustion engines suitable for application to two-cycle low-speed diesel engines.

### {Background Art}

With increasing concern about environmental protection in recent years, there is a need to reduce nitrogen oxide (referred to as "NOₓ" hereinafter) contained in exhaust gas emitted from main engines, such as two-cycle low-speed diesel engines, of ships. In a generally known method for reducing NOₓ, the exhaust gas from a diesel engine is passed through a denitration catalyst (for example, see Patent Literatures 1 and 2).
A commonly used example of a denitration catalyst is a catalyst that is based on a selective catalytic reduction (SCR) method in which NOₓ is deoxidized to nitrogen by using ammonium or the like as a reducing agent.

### {Citation List}

### {Patent Literature}

### {PTL 1}

Japanese Examined Patent Application, Publication No. Hei 07-006380

### {PTL 2}

Japanese Unexamined Patent Application, Publication No. Hei 05-288040

### {Summary of Invention}

### {Technical Problem}

However, in a case where the aforementioned two-cycle low-speed diesel engine is of a type that is equipped with a turbocharger turbine, the temperature of exhaust gas discharged from the turbocharger turbine is 300 °C or lower.
Generally, it is preferable that an NOₓ reductive reaction in the denitration catalyst be performed at a temperature higher than 300 °C, particularly higher than 320 °C. Passing the exhaust gas with a temperature lower than this temperature through the denitration catalyst may lead to problems such as degradation of the denitration catalyst within a short period of time or a lower NOₓ reduction effect.

A known method for solving such problems involves disposing the denitration catalyst between the two-cycle low-speed diesel engine and the turbocharger turbine, that is, disposing the denitration catalyst upstream of an intake of the turbocharger turbine, so as introduce high-temperature exhaust gas to the denitration catalyst before the temperature of the exhaust gas decreases.

However, if the denitration catalyst is disposed upstream of the intake of the turbocharger turbine, the denitration catalyst would have thermal capacity and thus function as a buffer. For this reason, if the load fluctuates transiently, such as when the diesel engine is activated or stopped, there is a problem in that the rotation speed of the turbocharger turbine does not follow the load fluctuation or is delayed.

On the other hand, there is another conceivable method in which the denitration catalyst is disposed downstream of the turbocharger turbine, and a burner for combusting fuel is disposed between the turbocharger turbine and the denitration catalyst so as to increase the temperature of exhaust gas to be introduced to the denitration catalyst.
However, because the energy of the fuel combusted in the burner is used only for increasing the temperature of the exhaust gas and is released outside the system without being recovered, there is a problem in that the fuel energy is not effectively utilized.

The present invention has been made to solve the aforementioned problems, and an object thereof is to provide a marine internal combustion engine that achieves reduced NOₓ emission from a marine internal combustion engine and that can also effectively utilize the energy of consumed fuel.

### {Solution to Problem}

In order to achieve the aforementioned object, the present invention provides the following solutions.
A marine internal combustion engine according to the present invention includes a cylinder section that is supplied with air and fuel so as to generate rotational driving force and that discharges exhaust gas; an exhaust receiver that receives the exhaust gas discharged from the cylinder section; an outer combustion tube that receives the exhaust gas discharged from the exhaust receiver; an inner combustion tube that is disposed inside the outer combustion tube and ejects fuel and combustion air into the outer combustion tube so as to combust the exhaust gas therein; a turbocharger that is driven by the exhaust gas heated within the outer combustion tube and discharged from the outer combustion tube and that turbocharges the air to be supplied to the cylinder section; and a denitrator having a catalyst that reduces nitrogen oxide contained in the exhaust gas discharged from the turbocharger.

With the marine internal combustion engine according to the present invention, since the outer combustion tube and the inner combustion tube are disposed in the space formed between the exhaust receiver and the turbocharger, the space within an engine room where the marine internal combustion engine is installed can be used (utilized) effectively.
Furthermore, since the fuel and the combustion air are combusted within the outer combustion tube, the temperature of exhaust gas before flowing into the turbocharger becomes higher. Thus, the temperature of outflowing exhaust gas after driving the turbocharger is higher, as compared with a case where the outer combustion tube and the inner combustion tube are not provided. Therefore, the temperature of the catalyst in the denitrator into which the exhaust gas flows is also increased, thereby preventing degradation of the catalyst and also achieving reduced NOₓ emission from the marine internal combustion engine.

Furthermore, in the marine internal combustion engine according to the present invention, the energy of the exhaust gas increased due to the increase in the exhaust-gas temperature by the outer combustion tube and the inner combustion tube can be efficiently recovered by generating power using a generator (hybrid turbocharger) directly coupled to the turbocharger or guiding a portion of the exhaust gas to a power turbine and then driving a generator in the power turbine.

In the aforementioned marine internal combustion engine, it is more preferable that an end of a combustion-air supply pipe that guides the combustion air to the inner combustion tube be connected to an intermediate section of an air supply pipe that is connected to an outlet of a compressor section included in the turbocharger.

With this marine internal combustion engine, the inner combustion tube is supplied with warm air, which is suitable for combustion within the outer combustion tube, from the air supply pipe via the combustion-air supply pipe, so that the combustion efficiency within the outer combustion tube can be increased, thereby achieving reduced consumption of fuel ejected from the inner combustion tube.

More preferably, the aforementioned marine internal combustion engine further includes a controller that controls the flow of the fuel and the combustion air to be supplied to the inner combustion tube on the basis of the temperature of the exhaust gas flowing into the denitrator.

With this marine internal combustion engine, since the flow of the fuel and the combustion air to be supplied to the inner combustion tube is controlled on the basis of the temperature of the exhaust gas flowing into the denitrator, the temperature of the catalyst in the denitrator can be controlled within a predetermined range. Thus, NOₓ emission from the marine internal combustion engine can be more reliably reduced.

### {Advantageous Effects of Invention}

The marine internal combustion engine according to the present invention is advantageous in that it achieves reduced NOₓ emission from a marine internal combustion engine and can also effectively utilize the energy of consumed fuel.

### {Brief Description of Drawings}

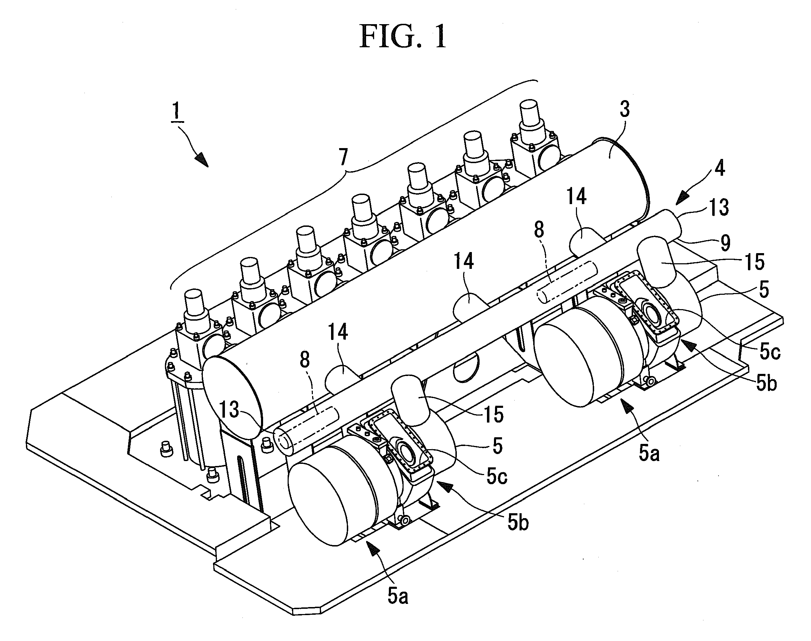

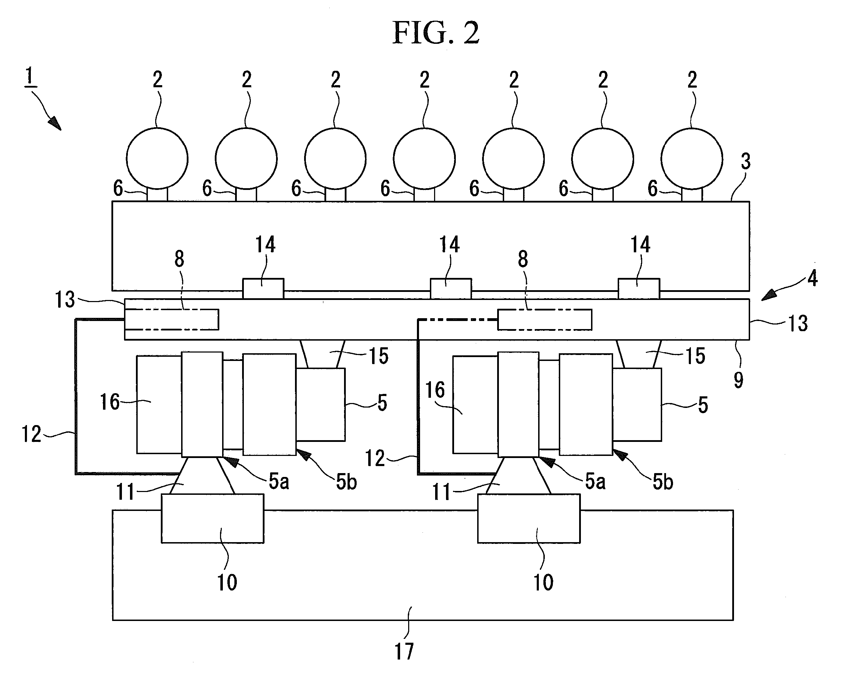

{Fig. 1} Fig. 1 is a perspective view schematically illustrating a marine internal combustion engine according to an embodiment of the present invention.
{Fig. 2} Fig. 2 is a configuration diagram schematically illustrating the marine internal combustion engine according to the embodiment of the present invention.

### {Description of Embodiments}

A marine internal combustion engine according to an embodiment of the present invention will be described below with reference to Figs. 1 and 2.
Fig. 1 is a perspective view schematically illustrating the marine internal combustion engine according to this embodiment, and Fig. 2 is a configuration diagram schematically illustrating the marine internal combustion engine according to this embodiment.
The following description of this embodiment is directed to a marine internal combustion engine (i.e., a marine internal combustion engine equipped with a denitrator) 1 according to the present invention applied to a two-cycle low-speed diesel engine mainly used as a main engine of a ship.

The marine internal combustion engine 1 mainly includes cylinder sections 2 (see Fig. 2), an exhaust receiver (exhaust collecting pipe: exhaust manifold) 3, a burner unit 4, turbochargers 5, a denitrator (not shown), and a controller (not shown).
A piston (not shown) coupled to a crankshaft is disposed in each cylinder section 2. Exhaust ports (not shown) of the cylinder sections 2 are in communication with (i.e., are connected to) the exhaust receiver 3 via (first) exhaust pipes 6. Each exhaust pipe 6 has an opening for the corresponding cylinder section 2, and the opening has an exhaust valve 7 (see Fig. 1) disposed therein for opening and closing the opening.

The burner unit 4 includes one or more (two in this embodiment) inner combustion tubes 8 and at least one (one in this embodiment) outer combustion tube 9.
Each inner combustion tube 8 ejects, into the outer combustion tube 9, combustion air supplied from an intermediate section of a (first) air supply pipe 11, which connects an outlet of a compressor section 5a of the corresponding turbocharger 5 to an intake of a corresponding air cooler (intercooler) 10 shown in Fig. 2, via a burner air supply pipe (combustion-air supply pipe) 12 and fuel supplied from a fuel supply source (not shown) via a burner fuel supply pipe (not shown), and is disposed such that the longitudinal axis of the inner combustion tube 8 is (substantially) parallel to the longitudinal axis of the outer combustion tube 9.

The outer combustion tube 9 is a hollow cylindrical member whose openings located at the opposite ends thereof are covered with plate-like cover members 13 having a circular shape in plan view, and is disposed within a space formed between the exhaust receiver 3 and the turbochargers 5 such that the longitudinal axis of the outer combustion tube 9 is (substantially) parallel to the longitudinal axis of the exhaust receiver 3. The exhaust receiver 3 and the outer combustion tube 9 are in communication with (i.e., are connected to) each other via one or more (three in this embodiment) (second) exhaust pipes 14, and the outer combustion tube 9 and turbine sections 5b of the turbochargers 5 are in communication with (i.e., are connected to) each other via (third) exhaust pipes 15. The combustion air and the fuel ejected into the outer combustion tube 9 from the inner combustion tubes 8 are combusted within the outer combustion tube 9, and thus heat exhaust gas (combustion gas) to be supplied to the turbochargers 5 from the exhaust receiver 3 so as to be used (utilized) for increasing the temperature of the exhaust gas.

Each turbocharger 5 mainly includes the aforementioned turbine section 5b that is driven by the exhaust gas guided from the cylinder sections 2 via the exhaust pipes 6, 14, and 15, the aforementioned compressor section 5a that is driven by the turbine section 5b so as to pressure-feed outside air to the cylinder sections 2, and a casing (not shown) that is provided between the turbine section 5b and the compressor section 5a so as to support them. A rotation shaft (not shown) with a first end protruding toward the turbine section 5b and a second end protruding toward the compressor section 5a extends through the casing. The first end of the rotation shaft is attached to a turbine disk (not shown) of a turbine rotor (not shown) that constitutes the turbine section 5b, whereas the second end of the rotation shaft is attached to a hub (not shown) of a compressor impeller (not shown) that constitutes the compressor section 5a. Reference numeral 5c in Fig. 1 denotes an outlet of each turbine section 5b.

The exhaust gas passing through the turbine sections 5b of the turbochargers 5 is guided to a funnel (not shown) via a (fourth) exhaust pipe (not shown) and is subsequently emitted outside the ship.
On the other hand, a suction filter 16 is disposed at an intake of each compressor section 5a, such that outside air passing through the suction filter 16 is guided to the compressor section 5a. Outlets of the air coolers 10 are in communication with (i.e., are connected to) a scavenging air chamber (air supply manifold) 17 shown in Fig. 2 via (second) air supply pipes (not shown). The scavenging air chamber 17 and intake ports (not shown) of the cylinder sections 2 are in communication with (i.e., are connected to) each other via (third) air supply pipes (not shown). The outside air passing through the compressor sections 5a is guided to the intake ports of the cylinder sections 2 via the (first) air supply pipes 11, the air coolers 10, the (second) air supply pipes, the scavenging air chamber 17, and the (third) air supply pipes so as to be supplied into the cylinder sections 2.

The denitrator is provided at an intermediate section of the (fourth) exhaust pipe. The denitrator is configured to reduce NOₓ contained in the exhaust gas guided toward the funnel via the turbine sections 5b of the turbochargers 5, and has a catalyst therein for reducing NOₓ.
The controller controls a fuel flow control valve (not shown), which adjusts the flow of fuel and is provided at an intermediate section of the burner fuel supply pipe (not shown) that supplies fuel to the inner combustion tubes 8 from the fuel supply source (not shown), and also controls combustion-air flow control valves (not shown), which are provided at intermediate sections of the burner air supply pipes 12 and adjust the flow of combustion air. For example, an exhaust-gas temperature measured by an exhaust-gas temperature sensor (not shown) is input to the controller, and the controller outputs control signals for controlling the degrees of opening of the fuel flow control valve and the combustion-air flow control valves.
For example, the exhaust-gas temperature sensor is disposed in the (fourth) exhaust pipe located upstream of the denitrator and measures the temperature of exhaust gas flowing from the turbochargers 5 toward the denitrator.

The following is a brief explanation of the operation performed in the marine internal combustion engine 1 having the above-described configuration.
When the marine internal combustion engine 1 starts running, exhaust gas is generated in the cylinder sections 2 and is then discharged from the cylinder sections 2 to the exhaust receiver 3 via the (first) exhaust pipes 6.
The exhaust gas discharged to the exhaust receiver 3 is guided into the outer combustion tube 9 constituting the burner unit 4 via the (second) exhaust pipes 14.
The inner combustion tubes 8 constituting the burner unit 4 eject combustion air and fuel into the outer combustion tube 9 where the combustion air and the fuel are combusted. The exhaust gas inside the outer combustion tube 9 is heated by the heat produced due to the combustion of the combustion air and fuel, whereby the temperature of the exhaust gas increases.

The heated exhaust gas is supplied to the turbine sections 5b of the turbochargers 5 via the (third) exhaust pipes 15 so as to rotationally drive the turbine rotors (not shown) of the turbine sections 5b. At this time, the compressor impellers (not shown) disposed coaxially with the turbine rotors are rotationally driven together with the turbine rotors so as to take in air from the outside, thereby increasing the pressure. In other words, the air is turbocharged. The turbocharged air is supplied to the cylinder sections 2 via the (first) air supply pipes 11, the air coolers 10, the (second) air supply pipes, the scavenging air chamber 17, the (third) air supply pipes, and the intake ports of the cylinder sections 2.

On the other hand, the exhaust air used for rotationally driving the turbine rotors of the turbine sections 5b decreases in temperature due to losing energy after rotationally driving the turbine rotors and flows in this decreased temperature state toward the (fourth) exhaust pipe from the outlets 5c of the turbine sections 5b.

The exhaust gas flowing into the (fourth) exhaust pipe flows into the denitrator so as to come into contact with the catalyst, whereby NOₓ contained in the exhaust gas is reduced. Subsequently, the exhaust gas is discharged to the outside from the denitrator via the (fourth) exhaust pipe.

Next, the control of the fuel flow control valve and the combustion-air flow control valves performed by the controller will be described.
The temperature of the exhaust gas flowing into the denitrator and measured by the exhaust-gas temperature sensor is input as a measurement signal to the controller. Based on the input measurement signal, the controller determines whether or not the temperature of the exhaust gas flowing into the denitrator is within a predetermined temperature range, for example, a temperature higher than or equal to at least a temperature at which the catalyst in the denitrator is effective.

If it is determined that the temperature of the exhaust gas flowing into the denitrator is below the predetermined temperature range, the controller outputs control signals for increasing the degrees of opening of the fuel flow control valve and the combustion-air flow control valves so as to increase the exhaust-gas temperature.
The fuel flow control valve and the combustion-air flow control valves, upon receiving the control signals, increase the degrees of opening thereof so as to increase the flow of fuel and combustion air supplied to the inner combustion tubes 8. This causes the amount of fuel and combustion air ejected from the inner combustion tubes 8 to increase, causing the amount of heat produced inside the outer combustion tube 9 to increase. Consequently, the temperature of the exhaust gas inside the outer combustion tube 9 increases, whereby the temperature of the exhaust gas flowing into the denitrator from the outer combustion tube 9 also increases.

On the other hand, if it is determined that the temperature of the exhaust gas flowing into the denitrator is above the predetermined temperature range, the controller outputs control signals for reducing the degrees of opening of the fuel flow control valve and the combustion-air flow control valves so as to decrease the exhaust-gas temperature.
The fuel flow control valve and the combustion-air flow control valves, upon receiving the control signals, reduce the degrees of opening thereof so as to reduce the flow of fuel and combustion air supplied to the inner combustion tubes 8. This causes the amount of fuel and combustion air ejected from the inner combustion tubes 8 to decrease, causing the amount of heat produced inside the outer combustion tube 9 to decrease. Consequently, the temperature of the exhaust gas inside the outer combustion tube 9 decreases, whereby the temperature of the exhaust gas flowing into the denitrator from the outer combustion tube 9 also decreases.

With the marine internal combustion engine 1 according to this embodiment, since the burner unit 4 is disposed in the space formed between the exhaust receiver 3 and the turbochargers 5, the space within an engine room where the marine internal combustion engine 1 is installed can be used (utilized) effectively.
Furthermore, the inner combustion tubes 8 constituting the burner unit 4 are supplied with warm air, which has a higher temperature than air within the scavenging air chamber 17 and is suitable for combustion within the outer combustion tube 9, from the (first) air supply pipes 11 via the burner air supply pipes 12, so that the combustion efficiency within the outer combustion tube 9 can be increased, thereby achieving reduced consumption of fuel ejected from the inner combustion tubes 8.

Furthermore, since the fuel and the combustion air are combusted in the burner unit 4, the temperature of exhaust air before flowing into the turbochargers 5 becomes higher. Thus, the temperature of outflowing exhaust gas after driving the turbochargers 5 is higher, as compared with a case where the burner unit 4 is not provided. Therefore, the temperature of the catalyst in the denitrator into which the exhaust gas flows is also increased, thereby preventing degradation of the catalyst and also achieving reduced NOₓ emission from the marine internal combustion engine 1.

Furthermore, as compared with a method in which the burner unit 4 is disposed between the turbochargers 5 and the denitrator such that the exhaust gas flowing out from the turbochargers 5 is heated before flowing into the denitrator, the energy of exhaust gas before the turbine sections of the turbochargers becomes greater than the amount required for compressing air in the turbochargers. Therefore, by using this excess energy in a generator directly coupled to the turbochargers or in a power turbine generator that guides a portion of the exhaust gas thereto to recover power, the energy of fuel delivered to the burner unit can be recovered.

Furthermore, by controlling the flow of fuel and combustion air to be supplied to the burner unit 4 on the basis of the temperature of exhaust gas flowing into the denitrator, the temperature of the catalyst in the denitrator can be controlled within a predetermined range. Thus, NOₓ emission from the marine internal combustion engine 1 can be more reliably reduced.

The present invention is not to be limited to the above embodiment and permits modifications or alterations where appropriate.
For example, although two inner combustion tubes 8 are disposed inside a single outer combustion tube 9 in the above embodiment, a single inner combustion tube 8 or three or more inner combustion tubes 8 may be disposed inside a single outer combustion tube 9, or two or more outer combustion tubes 9 may each have a single inner combustion tube 8 or two or more inner combustion tubes 8 disposed therein.

Furthermore, although three (second) exhaust pipes 14 are disposed between the exhaust receiver 3 and the outer combustion tube 9 in the above embodiment, the number of (second) exhaust pipes 14 may be one, two, or four or more.

Furthermore, although the combustion air is supplied to the inner combustion tubes 8 from the (first) air supply pipes 11 via the burner air supply pipes 12 in the above embodiment, the combustion air may be supplied from the scavenging air chamber 10 via the burner air supply pipes 12 or from an additionally-provided combustion-air supply source (e.g., compressed air reservoir) via the burner air supply pipes 12.

### {Reference Signs List}

- 1: marine internal combustion engine
- 2: cylinder section
- 3: exhaust receiver
- 5: turbocharger
- 5a: compressor section
- 5c: outlet
- 8: inner combustion tube
- 9: outer combustion tube
- 11: (first) air supply pipe
- 12: burner air supply pipe (combustion-air supply pipe)

## Claims

**1.**
A marine internal combustion engine comprising:
a cylinder section that is supplied with air and fuel so as to generate rotational driving force and that discharges exhaust gas;
an exhaust receiver that receives the exhaust gas discharged from the cylinder section;
an outer combustion tube that receives the exhaust gas discharged from the exhaust receiver;
an inner combustion tube that is disposed inside the outer combustion tube and ejects fuel and combustion air into the outer combustion tube so as to combust the exhaust gas inside the outer combustion tube;
a turbocharger that is driven by the exhaust gas heated within the outer combustion tube and discharged from the outer combustion tube and that turbocharges the air to be supplied to the cylinder section; and
a denitrator having a catalyst that reduces nitrogen oxide contained in the exhaust gas discharged from the turbocharger.

**2.**
The marine internal combustion engine according to Claim 1, wherein an end of a combustion-air supply pipe that guides the combustion air to the inner combustion tube is connected to an air supply pipe that is connected to an outlet of a compressor section included in the turbocharger.

**3.**
The marine internal combustion engine according to Claim 1 or 2, further comprising a controller that controls the flow of the fuel and the combustion air to be supplied to the inner combustion tube on the basis of the temperature of the exhaust gas flowing into the denitrator.
